# EUROPEAN PATENT APPLICATION

(11) **EP 4 335 754 A1**
(43) Date of publication of application: **13.03.2024**
(21) Application number: 22195208.8
(22) Date of filing: 12.09.2022
(51) Int. Cl.: B64F 1/12, B64F 1/22, B64F 1/36, B64F 1/31

(54) **AIRCRAFT GROUND HANDLING APPARATUS AND AIRCRAFT**

(71) Applicant: Volocopter GmbH, 76646 Bruchsal (DE)
(72) Inventor: Harms, Michael, 76337 Waldbronn (DE); Hahn, René, 76131 Karlsruhe (DE)
(74) Representative: LBP Lemcke, Brommer & Partner Patentanwälte mbB

(57) **Abstract**

We describe a ground handling apparatus (1) for an aircraft (20), in particular an electrically driven aircraft, more particular an electrically driven vertical take-off and landing aircraft, eVTOL, especially multicopter, said ground handling apparatus (1) comprising an autonomous motion device for moving the apparatus (1) underneath the aircraft (20) and a lifting device for lifting the aircraft (20) from below, wherein said motion device and said lifting device are adapted to cooperate for moving the aircraft (20) in its lifted state, wherein said ground handling apparatus (1) further comprises at least one or any combination of the following additional devices:
i) a holding device (7) for securing the aircraft (20) prior to lifting;
ii) a battery swapping device for extracting and inserting a battery (26) from and into the aircraft (20), respectively;
iii) a passenger access device that provides at least one step (19) for permitting passenger access to the aircraft (20), in particular in a lifted state of the aircraft;
iv) a power supply device (18) for supplying the aircraft (20) with electric power, in particular during or after battery swapping;
v) a battery charging device for charging a battery (26) of the aircraft (20), in particular a low-voltage onboard back-up battery;
vi) an air conditioning device (10) for providing conditioned air to the aircraft (20) during ground handling;
vii) a data transmission device for exchanging data with the aircraft (20);
viii) a damage detecting device for detecting damages to a mechanical structure of the aircraft (20);
ix) a landing zone monitoring device for detecting dirt, debris or other objects within an operating zone of the apparatus (1);
x) a loading/unloading device for loading and unloading luggage and/or other payload to and from the aircraft (20), respectively;
xi) a cleaning device (8) for removing dirt, debris or other objects within an operating zone of the apparatus (1);
xii) a weighing and balancing device for measuring a weight and/or a weight distribution of the aircraft (20).

## Description

The present invention relates to a ground handling apparatus for an aircraft, in particular an electrically driven aircraft, more particular an electrically driven vertical take-off and landing aircraft, eVTOL, especially a multicopter, according to appended claim 1.

The invention also relates to an aircraft as defined in appended claim 17, in particular an electrically driven aircraft, more particular an electrically driven vertical take-off and landing aircraft, eVTOL, especially a multicopter, adapted for ground handling by means of the apparatus according to the invention.

Ground handling facilities for aircraft of the above-mentioned type are known, e.g., from US 11,066,183 B2. Said document discloses a conveying device that moves an aircraft with controllable conveying speeds from a landing platform to a protected interaction area, in which area different actions are performed on the aircraft by various separate machines or equipment. While such facilities may be very comfortable to use, especially for aircraft passengers, they require a lot of space and are relatively costly due to the multitude of machines and devices comprised therein.

For example, the multicopter aircraft produced by the applicant requires a number of different tasks to be carried out during the turnaround time on the ground in order to prepare the aircraft for its next flight or mission (i.e., ground handling activities, like Battery Swap or Power-up, etc.). With the currently existing solutions (i.e., the state of the art) one basically requires one specific equipment for each of those ground handling activities.

Generally speaking, according to the prior art individual units or equipment are employed to achieve various aircraft related functionalities at the ground handling facility. Such an approach, however, is rather complex and requires a lot of space and time.

It is the object of the present invention to overcome this problem and to provide a ground handling apparatus for aircraft that is less complex and less demanding in terms of time and cost expenditure than the known cooperation of various different devices. It is also an object of the invention to provide an aircraft that is adapted for handling by means of such apparatus. It is another object of the invention to help to save weight on the aircraft side.

The object is achieved by means of a ground handling apparatus with the features of appended claim 1 and by means of an aircraft having the features of appended claim 17, which aircraft is particularly adapted for handling by means of said apparatus.

Advantageous further embodiments are defined in the sub-claims.

According to a first aspect of the invention, a ground handling apparatus for an electrically driven aircraft, in particular electrically driven vertical take-off and landing aircraft, eVTOL, especially multicopter, said ground handling apparatus comprising an autonomous motion device for moving the apparatus underneath an aircraft and a lifting device for lifting the aircraft from below, wherein said motion device and said lifting device are adapted to cooperate for moving the aircraft in its lifted state, further comprises at least one or any combination of the following additional devices:
i) a holding device for securing the aircraft prior to lifting;
ii) a battery swapping device for extracting and inserting a battery from and into the aircraft, respectively;
iii) a passenger access device that provides at least one step for permitting passenger access to the aircraft, in particular in a lifted state of the aircraft;
iv) a power supply device for supplying the aircraft with electric power, in particular during or after battery swapping;
v) a battery charging device for charging a battery of the aircraft, in particular a low-voltage onboard back-up battery;
vi) an air conditioning device for providing conditioned air to the aircraft during ground handling;
vii) a data transmission device for exchanging data with the aircraft;
viii) a damage detecting device for detecting damages to a mechanical structure of the aircraft;
ix) a landing zone monitoring device for detecting dirt, debris or other objects within an operating zone of the apparatus;
x) a loading/unloading device for loading and unloading luggage and/or other payload to and from the aircraft, respectively;
xi) a cleaning device for removing dirt, debris or other objects within an operating zone of the apparatus;
xii) a weighing and balancing device for measuring a weight and/or a weight distribution of the aircraft.

According to a second aspect of the invention, an electrically driven aircraft, in particular electrically driven vertical take-off and landing aircraft, eVTOL, especially multicopter, is adapted for ground handling by means of an apparatus according to said first aspect of the present invention. To achieve this, said aircraft provides enough space underneath its cabin or fuselage for moving the apparatus underneath said aircraft and a number of structural parts, in particular landing gear skid tubes, that permit a mechanical connection with said lifting device of the apparatus for lifting the aircraft from below, preferably together with any passengers and/or payload.

Therefore, in order to solve the above-defined problem, applicant proposes a single ground handling equipment or apparatus that can fulfil a variety of functionalities for the smooth handling of an aircraft before take-off and after landing. This will reduce the workforce and the cost expenditure needed for each of the individual activities which otherwise are performed manually or in semi-automated fashion while involving a number of individual machines or equipment.

In a preferred embodiment, the apparatus can comprise a combination of multiple functions (e.g., aircraft ground handling, detecting debris and cleaning of airfields, etc.) that are integrated in one single equipment or apparatus in order to be able to perform all ground handling activities related to the applicant's multicopter aircraft, or any other related aircraft, e.g., ground movement or taxiing, battery swap, ground power supply, cabin temperature pre-conditioning, etc., with one single piece of equipment.

Particularly advantageous embodiments while now be addressed in more detail:
In one embodiment of the apparatus according to the invention, said motion device comprises a moving platform, which platform is preferably made of steel or aluminium or any other material with good strength and similar properties, said platform comprising a plurality of plastic wheels, preferably made from polyurethane. Such wheels provide good grip and are durable, damage tolerant as well as easily available.

Similar to an AGV (autonomous guided vehicle) or AGTV (autonomous guided towing vehicle), said platform allows (autonomous) movement and transportation of the aircraft on, e.g., a multicopter airfield (from landing area to a parking area, etc.). The mentioned platform preferably has a certain minimum size to be able to lift the aircraft, but also has maximum dimensions to be able to fit underneath the aircraft. Generally speaking, the equipment height and width are directly dependent on the given dimensions of the landing gear and/or the lower airframe/fuselage of the aircraft (taking into account any additional devices, e.g., antennas).

As stated before, the aircraft according to the invention provides enough space underneath its cabin or fuselage for moving the apparatus underneath said aircraft and further provides a number of structural parts, in particular landing gear skid tubes, that permit a mechanical connection with said lifting device of the apparatus for lifting the aircraft from below, preferably together with passengers and/or payload.

In another embodiment of the apparatus according to the invention, said lifting device comprises a plurality of foldable or extendable lifting arms, which arms are adapted to mechanically contact a portion of the aircraft structure, in particular the aircraft's landing gear, preferably a landing gear skid tube, or the aircraft fuselage, said lifting device preferably further comprising at least one lifting drive, most preferably a hydraulic or electric spindle drive, for lifting said arms and the aircraft.

More generally speaking, the approach according to the invention includes lifting up the aircraft at a dedicated physical interface, e.g., at its landing gear, and later lowering the aircraft back on the ground. In the above example of the applicant's multicopter aircraft, the apparatus moves between the landing gear skid tubes and below the airframe or fuselage, and preferably extends four arms (two on each lateral side) in sidewards direction, which arms engage with the skid tubes by providing a clamping mechanism that closes around the skid tubes. After that, said arms are lifted, preferably by means of hydraulic drives or electric spindle drives. In contrary to conventional AGV/AGTV, movement of the cargo (i.e., the aircraft) is performed with passengers and/or payload onboard, which can be referred to as 'aircraft ground movement' or aircraft ground taxi not under own power'.

In a corresponding further embodiment of the apparatus according to the invention, said lifting device is therefore adapted to lift the aircraft together with passengers and/or payload onboard, which can greatly reduce handling time.

In yet another embodiment of the apparatus according to the invention, the apparatus comprises said holding device and said holding device is adapted to grip or clamp a portion of the aircraft's landing gear, preferably a landing gear skid tube, as already mentioned above. However, the invention is not limited in this respect. Any suitable aircraft structure could be gripped or clamped instead.

In this way, the aircraft is secured during handling thereof, which is particularly important if any passengers are still onboard.

In still another embodiment of the apparatus according to the invention, the apparatus comprises said battery swapping device and said battery swapping device comprises a lifting/lowering mechanism for vertically lifting and lowering a battery system in relation to a dedicated portion of the aircraft and a pusher/puller mechanism to insert and extract a battery system to/from said portion of the aircraft, preferably horizontally.

In this way, the invention can provide an automated or manual battery swap, i.e., an exchange of the aircraft's batteries - as opposed to alternative on-board charging concepts. Said battery swap can take place during ground movement. Preferably, the batteries are located at a rear end of the aircraft for easy access.

In another highly advantageous embodiment of the apparatus according to the invention, the apparatus comprises said passenger access device and said passenger access device comprises at least one retractable step or ladder, which is preferably movable up and down by electrical or hydraulic driving means.

Such retractable step, ladder or similar equipment serves to provide an embarking/disembarking aid for the passengers when boarding/disembarking the aircraft. Such equipment can be electrically or hydraulically moved up and down. Preferably, it is located in a position which is beneath the aircraft doors (in the "engaged position", i.e., when the aircraft is held (clamped) by the apparatus). An object of this embodiment is to reduce the step height from the cabin floor to the ground, so that, e.g., older and/or disabled passengers can board/disembark more easily via a couple of smaller steps rather than just one high step.

In a preferred further embodiment of the apparatus according to the invention, the apparatus comprises said power supply device and said power supply device is adapted for supplying the aircraft with low voltage electric power, wherein preferably said power supply device is either devised as a conductive power supply device, most preferably including automated connector mating and unmating, or as an inductive power supply device.

In this way, it is possible to supply the aircraft with an onboard power network during turnaround, for either power-up of the aircraft after a battery swap or in order to keep the aircraft's LV (low voltage) systems active on the ground, e.g., for pilot communication or for data transmission. The LV power supply is needed either after or during battery swap or simply to save energy of the aircraft's main battery system for the actual flight. As stated, said power supply can be either conductive and may include an (automated) connector mating/unmating, or it can be inductive.

In a highly preferred further embodiment of the apparatus according to the invention, the apparatus comprises said battery charging device and said battery charging device comprises an energy storage unit onboard the apparatus, which energy storage unit is devised for connection to an electric interface on the aircraft. Such energy storage unit serves as a so-called powerbank for the aircraft and thus can be changeable and/or rechargeable.

In this way, recharging of onboard batteries can be made possible by carrying a large energy storage onboard the equipment or apparatus, which energy storage can be connected (either automatically or manually) to an electric interface on the aircraft. Thus, for that particular function, the apparatus can be compared to a powerbank.

In a highly preferred further embodiment of the apparatus according to the invention, the apparatus comprises said air conditioning device and said air conditioning device comprises a heat exchanger and a fan coupled to an air duct in order to push chilled or heated air through said air duct into a cabin of the aircraft, wherein said duct comprises an interface for connecting to an interface on the cabin, said air conditioning device preferably consisting of or comprising standard commercial off-the-shelf parts.

Providing air-conditioning of the aircraft cabin during turnaround helps to save energy of the aircraft's main battery system and to reduce the power-on time of an internal air conditioning (A/C) system of the aircraft. These aircraft components are certified components (and thus rather expensive) while components of a ground-based air conditioning device can be devised as relatively cheap COTS (commercial off-the-shelf) parts.

Preferably, an aircraft cabin and/or a battery bay of the aircraft is to be pre-conditioned, thereby to reduce the effort of the on-board cooling system to actually cool down the cabin before flight or provide an optimum operating temperature for the aircraft's batteries. This can extend it to other areas or compartments of the aircraft that comprise temperature sensitive areas. In this way the onboard A/C system can focus on maintaining the temperature during flight, thus reducing energy consumption (and achieving a longer flight range) and/or reducing a weight of onboard A/C equipment (again achieving a longer flight range). This can be achieved if the apparatus - according to the above-described embodiment - includes a heat exchanger and a fan to push chilled or heated air through an air duct into the cabin. For example, a big tube can be provided and connected to a corresponding interface on the cabin (which interface basically takes the form of a hole or a valve), and then the fan can provide cool air to an inside of the cabin.

In a further embodiment of the apparatus according to the invention, the apparatus comprises said data transmission device and said data transmission device is devised for wireless data transfer or wired data transfer, preferably via an additional signal wire in a connector in the above-mentioned power supply device, wherein preferably the apparatus comprises a data storage unit for intermediate data storage and subsequent transfer to an external database, wherein most preferably data transfer is performed via a close-range high-speed connection.

In this way, the data transmission device can be used to achieve (automated) data transmission, e.g., of safety relevant data that was recorded during a previous flight and that can be transferred (either in wireless mode or via an additional signal wire, preferably in the same connector that supplies the onboard power network) onto the ground handling apparatus, which may store it and transfer it to a dedicated database later on. This greatly reduces required hard drive dimensions (and thus aircraft weight) to just the data volume recorded on one flight. Furthermore, the use of a close-range high-speed connection can reduce the risk of data streams being hijacked, corrupted or hacked and allows the use of secure data streams.

In a further embodiment of the apparatus according to the invention, the apparatus further comprises a number of sensors, e.g., lasers or optical cameras or a combination of different sensor technologies, that are operative in connection with the motion device to align the apparatus with the aircraft in order to lift the aircraft for ground movement.

An autonomous ground handling platform will - by default - have a number of sensors to be able to detect and align with the aircraft in order to lift the aircraft for ground movement. In the context of the present invention, these sensors can advantageously be used to provide additional functionalities.

In a corresponding further embodiment of the apparatus according to the invention, the apparatus comprises said damage detecting device and said damage detecting device is adapted to use said sensors to investigate landing gear structural parts of the aircraft and to detect structural damages to said landing gear structural parts and/or to determine an overall deformation of the landing gear, preferably by measuring a distance between pre-defined structural parts of the aircraft, e.g., a skid width, i.e., a distance between an aircraft's skid tubes.

In yet another corresponding further embodiment of the apparatus according to the invention, the apparatus comprises said landing zone monitoring device and said landing zone monitoring device is adapted to use said sensors to investigate an aircraft landing zone (e.g., a landing pad) around the apparatus and to detect if said zone is free of obstacles. This would otherwise have to be done by (additional) staff members, which can be costly and error prone.

In another embodiment of the apparatus according to the invention, the apparatus comprises said loading/unloading device and said loading/unloading device comprises a robotic device, e.g., a robotic arm, which is adapted to hand over luggage to a passenger of the aircraft. This further reduces the required number of staff for aircraft ground handling.

In yet another embodiment of the apparatus according to the invention, the apparatus comprises said cleaning device and said cleaning device comprises a number of brushes, preferably rotating brushes in cooperation with a separate container, e.g., a vacuum cleaner, for intermediate storage of any removed dirt or debris.

This helps to provide a clean and safe landing site as a secondary effect of using the inventive apparatus.

In still another embodiment of the apparatus according to the invention, the apparatus comprises said cleaning device and said weighing and balancing device comprises scales and/or other sensors, e.g., load cells or acceleration meters, which scales or sensors are preferably located on the above-mentioned lifting drive.

In this way, weighing and balancing of the aircraft can be carried out using the inventive apparatus to ensure that the aircraft is within given limits (as part of the pre-flight check). This can be achieved by means of said scales and other sensors. More than one of these is required in order to establish a weight distribution of the aircraft besides a simple measurement of a total aircraft weight.

In order to be compatible with an embodiment of the apparatus according to the invention, the aircraft according to the invention advantageously further comprises at least one or any combination of the following features:
a) a battery compartment that is accessible by said swapping device for extracting and inserting a battery from and into the aircraft, respectively;
b) a passenger access that can be aligned with said passenger access device that passenger access to the aircraft, in particular in a lifted state of the aircraft;
c) a first connecting means, e.g., a plug or an inductive coupling device, for connecting with said power supply device for supplying the aircraft with electric power, in particular during or after battery swapping;
d) a second connecting means, e.g., a plug or an inductive coupling device, for connecting with said battery charging device for charging a battery of the aircraft, in particular a low-voltage onboard back-up battery;
e) a port or valve means for coupling with said air conditioning device for providing conditioned air to the aircraft during ground handling;
f) a data transmission device for exchanging data with said data transmission device of the apparatus, preferably comprising a wireless or wired data link with appropriate third connecting means;
g) a mechanical interface for connecting with the apparatus according to the invention, in particular the aircraft's landing gear skid tubes or another suitable interface structure.

Said features provide interface means that cooperate with the various devices comprised within embodiments of the inventive apparatus, as described in detail above.

For additional simplification of use, in a further embodiment of the aircraft according to the invention any combination of said first to third connecting means can be integrated into a single common connecting device.

Further features and advantages of the invention will now be explained in connection with preferred exemplary embodiments as shown in the appended drawings.
Figure 1 shows a schematic side view of an apparatus according to the invention;
Figure 2 schematically shows the apparatus of Figure 1 in a top view;
Figure 3 schematically shows the apparatus of Figure 1 in a front view;
Figure 4 shows the apparatus analogous to Figure 1 together with a schematically indicated aircraft according to the invention; and
Figure 5 shows the apparatus analogous to Figure 3 with a schematically indicated landing gear of an aircraft according to the invention.

In the drawings, same reference signs indicate same or equivalent items.

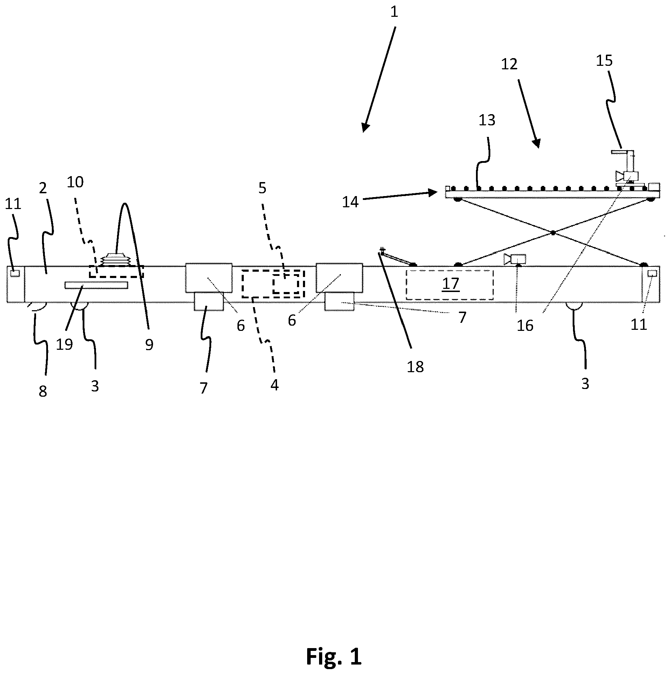

In Figure 1, an apparatus 1 according to the invention is shown schematically in a side view.

The apparatus 1 comprises, at reference numeral 2, a movable platform, for example made of steel, aluminium or another suitable material of sufficient stability. The platform 2 is movable due to a number of wheels or rollers 3 arranged on an underside of the platform 2. Associated drive units for the wheels 3 are not shown in the drawing for reasons of clarity.

The movement of the apparatus 1 and also its further functions are controlled by a central control unit 4, whose signal connections with the further components of the apparatus 1 are not drawn for reasons of clarity. The control unit 4 comprises a data storage unit 5, e.g., HDD, which, however, may alternatively be arranged outside the control unit 4.

Furthermore, the apparatus 1 comprises four laterally extendable arms 6, of which only two are visible in Figure 1 for reasons of presentation. The arms 6 are equipped with a clamping mechanism 7 on their respective undersides, which clamping mechanism 7 serves as a holding device to securely hold an aircraft during its handling, which will be discussed in more detail below.

Preferably, although not shown, said arms 6 and/or the corresponding drives comprise a weighing and balancing device including scales and/or other sensors, e.g., load cells or acceleration meters, in order to determine a (total) weight and/or a weight distribution of an aircraft.

Furthermore, at reference numeral 8, the apparatus 1 comprises at its underside a cleaning device, which may comprise (rotatable) cleaning brushes and a vacuum cleaner together with a storage container (not shown in detail).

At reference numeral 9, a hose or duct element (i.e., an air duct) can be seen which is intended and designed for a fluid-conducting connection to a correspondingly designed aircraft. The hose or duct element 9 interacts with an air conditioning system or A/C device 10, which preferably comprises at least one heat exchanger and a fan (not shown in detail).

At reference numeral 11, laser sensors are shown that cooperate in particular with the control unit 4 to determine a positioning of the apparatus 1, e.g., relative to an aircraft to be handled, and to allow its controlled movement by means of said wheels 3. The laser sensors 11 can also be used for damage detection on an aircraft, as explained earlier.

Reference numeral 12 indicates a device that can be raised and lowered vertically, i.e., a lifting/lowering mechanism, the corresponding drive means of which, such as hydraulic or electric spindles, are not shown for reason of clarity. Said device or mechanism 12 has, in its upper part, a conveyor or (horizontal) transport device 14 equipped with roller means 13, which also has pushing and pulling means, i.e., a pusher/puller mechanism 15, the function of which will be discussed in more detail below.

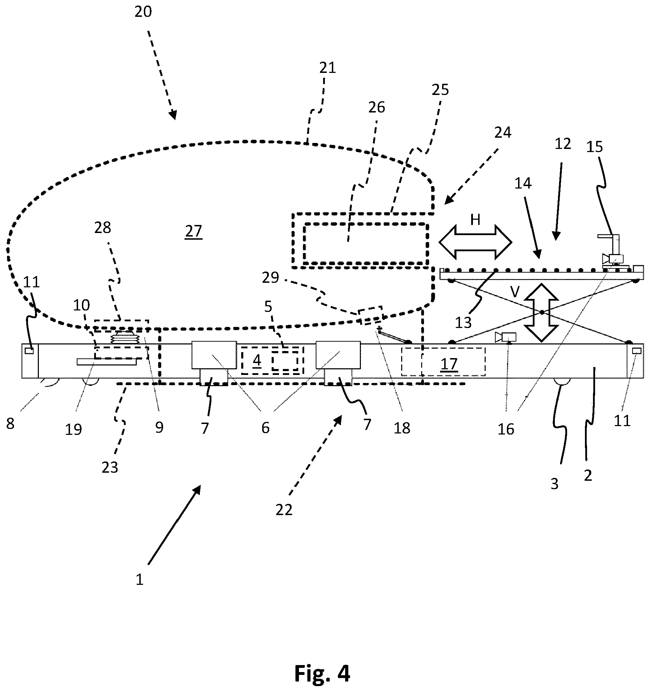

In this way, the apparatus 1 comprises a battery swapping device, which battery swapping device comprises the lifting/lowering mechanism, i.e., said device 12, for vertically lifting and lowering a battery system in relation to a dedicated portion of the aircraft and a pusher/puller mechanism, i.e., said transport device 14 with said roller means 13 and said pushing/pulling means 15 to insert and extract a battery system to/from said portion of the aircraft, preferably horizontally (cf. Figure 4).

Reference numeral 16 indicates optical camera units, respectively, which also cooperate at least with the control unit 4, e.g., for locating an aircraft to be handled, for airfield monitoring (e.g., debris detection), damage control and/or for controlling said pushing/pulling means 15.

At reference numeral 17 a battery unit or energy storage unit of the apparatus 1 is shown, which is preferably accommodated inside the platform 2. This battery unit 17 does not primarily serve to supply the apparatus 1 itself with electrical energy, but is intended to charge an aircraft accommodated by the apparatus 1 or its electrical energy storage units (batteries) in the manner of a power bank. The battery unit 17 is itself advantageously either replaceable or rechargeable.

Reference numeral 18 shows an electrical-data connection device, e.g., an arm comprising a flexible cable arrangement, intended to supply low voltage power to an aircraft accommodated by the apparatus 1 and, at the same time, to exchange data with the aircraft, preferably as determined by the control unit 4 and using the aforementioned data storage unit 5. Said electrical-data connection device 18 can therefore also be referred to as or forms part of both a power supply device and a data transmission device. If devised accordingly, it can also be used in the battery charging process described in the preceding paragraph.

It has already been pointed out that, for the sake of clarity, the manifold connections from the control unit 4 to the other components of the apparatus 1 are not shown graphically.

Finally, at reference numeral 19, a laterally extendable sliding, i.e., retractable step is shown which is intended to provide simplified access to an aircraft accommodated by the apparatus 1. As cannot be seen for reasons of presentation, such a sliding step 19 is preferably also arranged on the opposite side of the apparatus 1. Corresponding driving means for step 19 are not shown for reason of clarity.

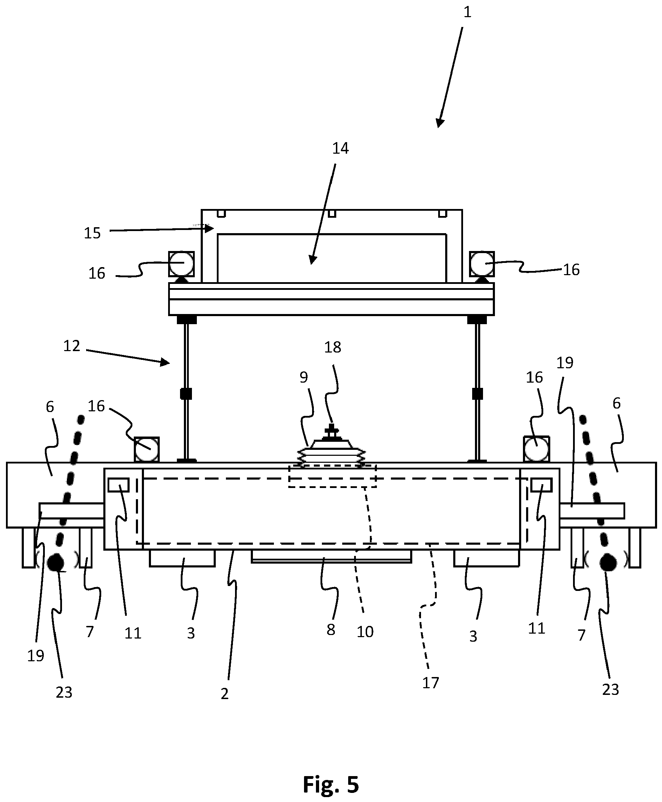

Further below, with reference to Figures 4 and 5, it is shown in more detail how an interaction between the apparatus 1 and an aircraft received by the apparatus 1 may be effected.

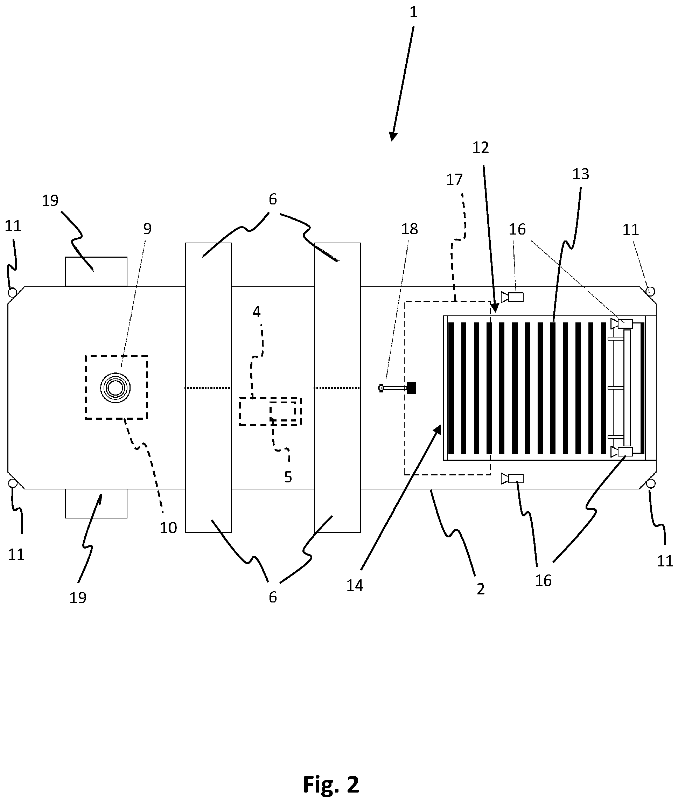

First, however, Figure 2 shows a top view of the structure of the apparatus 1 as already described. It can be seen that there are a total of four laser sensors 11, each mounted at a respective corner of the platform 2. Correspondingly, there are also four optical camera units 16, two of which are mounted directly on said platform 2, while two other camera units 16 are mounted on the top of the device or mechanism 12, as shown.

In addition, from Figure 2, the aforementioned four (lifting) arms 6 can be seen together with the aforementioned further sliding step 19.

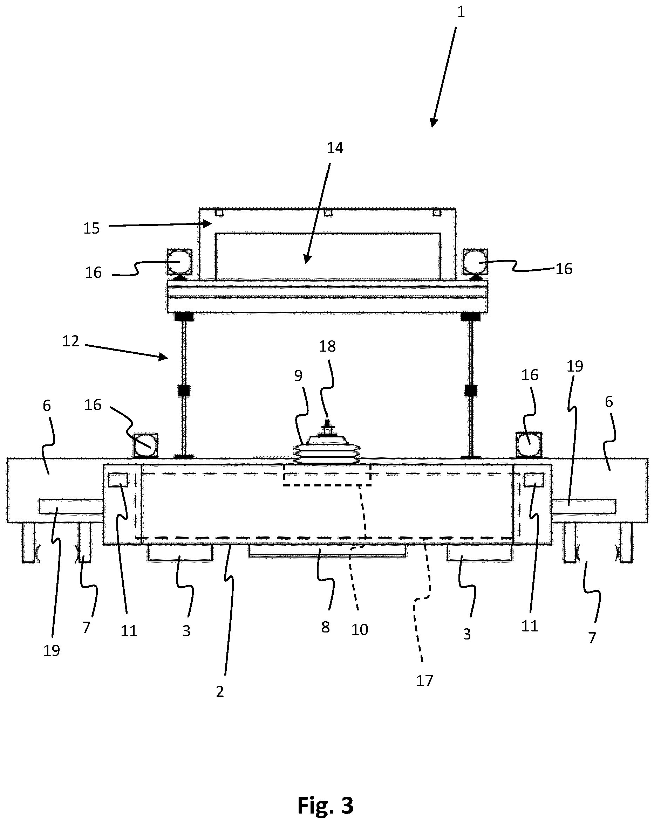

Figure 3 shows the apparatus 1 together with the already mentioned functional further components in a frontal view. The design of the above-mentioned clamping mechanisms 7, which are specially designed as a holding device to clamp and secure the skid tubes (cf. Figure 5) of an aircraft landing gear, is clearly visible here.

In Figure 4 it is shown in a very simplified and schematic way how the apparatus 1 interacts with an aircraft 20, which aircraft 20 is devised in the form of an electrically driven multicopter, i.e., a vertically taking off and landing (VTOL) aircraft with a plurality of electrically driven rotors, which is however not shown in detail in Figure 4.

Only the fuselage 21 of the aircraft 20 is shown in Figure 4, to which fuselage 21 a landing frame or landing gear 22 with skids or skid tubes 23 is attached at the bottom. In its rear part 24, the aircraft 20 has an opening or battery compartment 25, which battery compartment 25 accommodates a battery or battery system 26 of the aircraft 20, which battery or battery system 26 can serve in particular to supply energy to the said rotors.

As can be seen from Figure 4 and also from Figure 5, the apparatus 1 moves with the major part of its platform 2 under the fuselage 21 of the aircraft 20 between said skid tubes 23 as determined by the said sensors (laser sensors 11 and camera units 16, respectively) under command of the control unit 4; then the arms 6 move apart sideways until the clamping mechanisms 7 can grip or clamp the skids or skid tubes 23 of the landing frame 22, as indicated in Figure 5. Then, by means of the arms 6, the entire aircraft 20 can be raised and moved by means of the apparatus 1, i.e., its wheels 3. During this process, the said sensors 11, 16 can detect any damage and/or deformation of the aircraft 20, in particular in the area of the landing gear 22, e.g., by measuring a skid width.

During movement of the apparatus 1, furthermore, with the aid of the cleaning device 8, a landing site for the aircraft 20 can be cleaned of debris or contaminants. Such airfield soiling can also be detected and targeted with the aid of the said sensors, in particular the camera units 16. Preferably, however, such cleaning is carried out without a picked-up aircraft 20.

When the aircraft 20 is held and/or lifted by the apparatus 1, a passenger access (e.g., a door or hatch, not shown) of the aircraft 20 is aligned with step 19 so that passengers can easily get on and off the aircraft 20.

As can be seen in particular from Figure 4, the battery 26 can be removed from the battery compartment 25 of the aircraft 20 and replaced by means of the vertical lifting and lowering device 12 (cf. arrow V) and in particular by means of the further means contained therein (see above) with the help of the camera units 16 mounted on said device 12. To this end, device 12 makes use of said conveyor or (horizontal) transport device 14 equipped with roller means 13 in conjunction with said pushing and pulling means 15, which can be used to move battery 26 in a horizontal direction in and out aircraft 20 according to arrow H.

Battery 26 is preferably charged at a charging station (not shown) before the aircraft arrives. After swapping the batteries, a used battery can be brought to said charging station after the aircraft has departed.

In one embodiment, there can be a second apparatus analogous to apparatus 1 that arrives with a new battery, whereas the first apparatus will drive away with the discharged battery and bring it to the charging station. In a preferred embodiment, one ground equipment or apparatus can accommodate both the charged and the discharged battery.

By means of the hose or duct element 9, air conditioning of an interior space or cabin 27 of the aircraft 20 can be effected by means of the air conditioning system 10. For this purpose, the aircraft 20 has, at reference numeral 28, a suitable connection interface for the hose or duct element 9, e.g., a port or valve means.

Furthermore, the connection device 18 can be used to exchange data with the aircraft 20, in particular a flight control unit (not shown) on board the aircraft 20, and/or to supply the aircraft 20 with low voltage. For this purpose, the aircraft 20 again has a suitable connection terminal (or connecting means) for the connection device 18, which connection terminal is schematically depicted at reference numeral 29. Said connection terminal 29 can also be used as (or can comprise) a further connecting means for charging a battery 26 of the aircraft 20, in particular a low-voltage onboard back-up battery, by means of energy storage unit 17.

However, the invention also encompasses embodiments wherein low voltage power supply, battery recharging and data transmission, respectively, can occur via different, i.e., separate connecting means (not shown).

The aforementioned device 12 can in principle also be used for loading or unloading the aircraft 20 with luggage, which is not shown in the drawings. Alternatively, a robot or robot arm can also be used for this purpose, which is also not shown in the drawings. Such a robot (arm) can also be used for battery swapping instead of device 12.

The sliding step 19 already mentioned several times serves to make it easier for passengers to get on and off the aircraft 20.

## Claims

1. A ground handling apparatus (1) for an aircraft (20), in particular an electrically driven aircraft, more particular an electrically driven vertical take-off and landing aircraft, eVTOL, especially multicopter, said ground handling apparatus (1) comprising an autonomous motion device for moving the apparatus (1) underneath the aircraft (20) and a lifting device for lifting the aircraft (20) from below, wherein said motion device and said lifting device are adapted to cooperate for moving the aircraft (20) in its lifted state, wherein said ground handling apparatus (1) further comprises at least one or any combination of the following additional devices:
i) a holding device (7) for securing the aircraft (20) prior to lifting;
ii) a battery swapping device for extracting and inserting a battery (26) from and into the aircraft (20), respectively;
iii) a passenger access device that provides at least one step (19) for permitting passenger access to the aircraft (20), in particular in a lifted state of the aircraft;
iv) a power supply device (18) for supplying the aircraft (20) with electric power, in particular during or after battery swapping;
v) a battery charging device for charging a battery (26) of the aircraft (20), in particular a low-voltage onboard back-up battery;
vi) an air conditioning device (10) for providing conditioned air to the aircraft (20) during ground handling;
vii) a data transmission device for exchanging data with the aircraft (20);
viii) a damage detecting device for detecting damages to a mechanical structure of the aircraft (20);
ix) a landing zone monitoring device for detecting dirt, debris or other objects within an operating zone of the apparatus (1);
x) a loading/unloading device for loading and unloading luggage and/or other payload to and from the aircraft (20), respectively;
xi) a cleaning device (8) for removing dirt, debris or other objects within an operating zone of the apparatus (1);
xii) a weighing and balancing device for measuring a weight and/or a weight distribution of the aircraft (20).

2. The apparatus (1) of claim 1, wherein said lifting device comprises a plurality of foldable or extendable lifting arms (6), which arms (6) are adapted to mechanically contact a portion of the aircraft's landing gear (22), preferably a landing gear skid tube (23), said lifting device preferably further comprising at least one lifting drive, most preferably a hydraulic or electric spindle drive for lifting said arms (6) and the aircraft (20).

3. The apparatus (1) of claim 1 or 2, wherein said lifting device is adapted to lift the aircraft (20) together with passengers and/or payload onboard.

4. The apparatus (1) of any one of claims 1 through 3, wherein said holding device (7) is adapted to grip or clamp a portion of the aircraft's landing gear (22), preferably a landing gear skid tube (23).

5. The apparatus (1) of any one of claims 1 through 4, wherein said battery swapping device comprises a lifting/lowering mechanism (12) for vertically lifting and lowering a battery or battery system (26) in relation to a dedicated portion (24, 25) of the aircraft (20) and a pusher/puller mechanism (15) to insert and extract a battery or battery system (26) to/from said portion of the aircraft (20), preferably horizontally.

6. The apparatus (1) of any one of claims 1 through 5, wherein said passenger access device comprises at least one retractable step (19) or ladder, which is preferably movable up and down or in and out by electrical or hydraulic driving means.

7. The apparatus (1) of any one of claims 1 through 6, wherein said power supply device (18) is adapted for supplying the aircraft (20) with low voltage electric power, wherein preferably said power supply device is either devised as a conductive power supply device, most preferably including automated connector mating and unmating, or as an inductive power supply device.

8. The apparatus (1) of any one of claims 1 through 7, wherein said battery charging device comprises an energy storage unit (17) onboard the apparatus (1), which energy storage unit (17) is devised for connection to an electric interface (29) on the aircraft (20).

9. The apparatus (1) of any one of claims 1 through 8, wherein said air conditioning device (10) comprises a heat exchanger and a fan coupled to an air duct (9) in order to push chilled or heated air through said air duct (9) into a cabin (27) of the aircraft (20), wherein said air duct (9) comprises an interface for connecting to an interface (28) on the cabin (27), said air conditioning device (10) preferably consisting of or comprising standard commercial off-the-shelf parts.

10. The apparatus (1) of any one of claims 1 through 9, wherein said data transmission device (18) is devised for wireless data transfer or wired data transfer, preferably via an additional signal wire in a connector in the power supply device of claim 8, wherein preferably the apparatus (1) comprises a data storage unit (5) for intermediate data storage and subsequent transfer to an external database, wherein most preferably data transfer is performed via a close-range high-speed connection.

11. The apparatus (1) of any one of claims 1 through 10, further comprising a number of sensors, e.g., lasers or laser sensors (11) or optical cameras (16) or a combination of different sensor technologies, that are operative in connection with the motion device to align the apparatus (1) with the aircraft (20) in order to lift the aircraft (20) for ground movement.

12. The apparatus (1) of claim 11, wherein said damage detecting device is adapted to use said sensors (11, 16) to investigate landing gear (22) structural parts of the aircraft (20) and to detect structural damages to said landing gear (22) structural parts and/or to determine an overall deformation of the landing gear (22), preferably by measuring a distance between pre-defined structural parts of the aircraft (20), e.g., a skid width.

13. The apparatus (1) of claim 11 or 12, wherein said landing zone monitoring device is adapted to use said sensors (11, 16) to investigate an aircraft landing zone around the apparatus (1) and to detect if said zone is free of obstacles.

14. The apparatus (1) of any one of claims 1 through 13, wherein said loading/unloading device comprises a robotic device, e.g., a robotic arm, which is adapted to hand over luggage to a passenger of the aircraft (20).

15. The apparatus (1) of any one of claims 1 through 14, wherein said cleaning device (8) comprises a number of brushes, preferably rotating brushes in cooperation with a separate container, e.g., a vacuum cleaner, for intermediate storage of any removed dirt or debris.

16. The apparatus (1) of any one of claims 1 through 14, wherein said weighing and balancing device comprises scales and/or other sensors, e.g., load cells or acceleration meters, which scales or sensors are preferably located on said lifting drive.

17. An aircraft (20), in particular an electrically driven aircraft, more particular an electrically driven vertical take-off and landing aircraft, eVTOL, especially multicopter, adapted for ground handling by means of the apparatus (1) according to any one of claims 1 through 16, said aircraft (20) providing enough space underneath its cabin or fuselage (21) for moving the apparatus (1) underneath said aircraft (20) and a number of structural parts, in particular landing gear skid tubes (23), that permit a mechanical connection with said lifting device of the apparatus (1) for lifting the aircraft (20) from below, preferably together with passengers and/or payload.

18. The aircraft (20) of claim 17, further comprising at least one or any combination of the following features:
a) a battery compartment (25) that is accessible by said swapping device for extracting and inserting a battery (26) from and into the aircraft (20), respectively;
b) a passenger access that is alignable with said passenger access device that passenger access to the aircraft (20), in particular in a lifted state of the aircraft;
c) a first connecting means (29), e.g., a plug or an inductive coupling device, for connecting with said power supply device for supplying the aircraft (20) with electric power, in particular during or after battery swapping;
d) a second connecting means (29), e.g., a plug or an inductive coupling device, for connecting with said battery charging device for charging a battery of the aircraft (20), in particular a low-voltage onboard back-up battery;
e) a port or valve means (28) for coupling with said air conditioning device (10) for providing conditioned air to the aircraft (20) during ground handling;
f) a data transmission device for exchanging data with said data transmission device of the apparatus (1), preferably comprising a wireless or wired data link with appropriate third connecting means (29);
g) a mechanical interface for connecting with the apparatus (1), in particular the aircraft's landing gear skid tubes or another suitable interface structure.

19. The aircraft (20) of claim 18, wherein any combination of said first to third connecting means (29) are integrated into a single common connecting device.
